# EUROPÄISCHE PATENTSCHRIFT

(11) **EP 3 210 721 B1**
(45) Veröffentlichungstag und Bekanntmachung des Hinweises auf die Patenterteilung: **29.08.2018**
(21) Anmeldenummer: 16157625.1
(22) Anmeldetag: 26.02.2016
(51) Int. Cl.: B29C 33/72

(54) **VERWENDUNG EINES BÜRSTENSCHLEIFKOPFS**
USE OF A BRUSH GRINDING HEAD
UTILISATION D'UNE TETE DE BROSSE

(43) Veröffentlichungstag der Anmeldung: 30.08.2017
(73) Patentinhaber: Tyrolit - Schleifmittelwerke Swarovski K.G., 6130 Schwaz (AT)
(72) Erfinder: Ankersen, Bent, 7400 Herning (DK)
(74) Vertreter: Torggler & Hofinger Patentanwälte

(56) Entgegenhaltungen:
- EP-A1- 0 638 392
- EP-A1- 2 042 269
- EP-A2- 1 025 958
- WO-A1-2007/009466
- WO-A1-2008/077398
- WO-A1-2012/003828
- WO-A2-03/048569
- CH-A5- 687 133
- CN-A- 103 465 181
- DE-U1- 9 412 557
- DE-U1-202010 010 728
- JP-A- 2008 030 283
- US-A- 3 699 727
- US-A1- 2002 090 901

## Beschreibung

Die Erfindung betrifft spezielle Verwendungen eines Bürstenschleifkopfs.

Bürstenschleifköpfe sind bereits aus dem Stand der Technik bekannt. Bei der beispielsweise in der CH 687 133 A5 beschriebenen Lösung kommt als Schleifelement Schleifpapier zum Einsatz. Dabei wird der Bürstenschleifkopf zur Bearbeitung von Holz, insbesondere Täferbrettern, verwendet. Ein solcher Bürstenschleifkopf eignet sich allerdings nicht für die Oberflächenbearbeitung von Bauteilen aus Verbundwerkstoffen und auch nicht dazu, im Nassschliff eingesetzt zu werden.

Die EP 0 638 392 A1 offenbart ein Schleifmittel mit einem Substrat in Form von Papier oder einer Schaumträgerschicht, welches mit einer Polyurethanheißschmelze beschichtet ist, in die mehrere Schleifpartikel eingebettet sind.

Die CN 103 465 181 A offenbart ein Schleifpapier mit einer schwammartigen Trägerschicht. Darauf ist ein Klebematerial 2 angeordnet, auf welches ein Schleifmaterial geklebt ist.

Die DE 94 12 557 U1 offenbart einen Schleifkörper mit einem Träger aus Papier, Gewebe oder Kunststofffolie. Auf dem Träger ist ein nachgiebiger Grundköper angeordnet, auf dem eine Schleifmittelschicht aufgebracht ist. Optional kann zusätzlich zwischen dem Grundkörper und der Schleifmittelschicht eine Zwischenschicht aus Papier, Gewebe oder Kunststofffolie vorgesehen sein. Sowohl die Zwischenschicht als auch der Träger sind unnachgiebig ausgebildet.

Die WO 2012/003828 A1 offenbart eine Abschleifanordnung zum Abschleifen von Werkstückoberflächen wie beispielsweise eine Windturbinenschaufel.

Die WO 03/048569 A2 offenbart eine Vorrichtung zur Oberflächenbehandlung von Rotorblättern auf einer Windmühle und bildet die Basis für den Oberbegriff des Anspruchs 1. Die WO 2008/077398 A1 offenbart eine automatische Schleifmaschine zum Schleifen von länglichen Gegenständen, wie beispielsweise Rotorblätter von Windturbinen.

Die WO 2007/009466 A1 zeigt einen Profilstreifen für eine Zylindertrommel, wobei der Profilstreifen Schleifelemente und Bürsten aufweist. Die Schleifelemente umfassen ein Gewebe, auf dem Sandkörner angeordnet sind, wobei eine Kantenzone ohne Sandkörner vorgesehen ist.

Die US 3 699 727 A zeigt einen langgestreckten, zähen und biegsamen Unterlagestreifen, der eine Vielzahl von aufrechtstehenden und quer ausgerichteten parallelen Schleiflappen trägt, wobei die Lappen von einem kräftigen und bei Raumtemperatur festen Bindemittel gehalten werden.

Die DE 20 2010 010 728 U1 zeigt eine Schleifbürste mit einem Bürstenbesatz, welcher aus Rosshaar bestehen kann.

Die DE 20 2006 006 691 U1 offenbart eine Streifenbürste, bei welcher die Borsten als Mexiko-Fiber ausgebildet sein können. Die JP 2008030283 offenbart die Verwendung eines Bürstenschleifkopfs zur Behandlung einer beschichteten Oberfläche einer Negativform zur Herstellung eines Werkstücks, das aus einem Kohlefaser- Verbundwerkstoff besteht und bildet die Basis für den Oberbegriff des Anspruchs 2.

Die objektive technische Aufgabe besteht darin, Verwendungen eines Bürstenschleifkopfs, welcher die vorbeschriebenen Nachteile des Standes der Technik behebt, anzugeben.

Diese Aufgabe wird durch die Merkmale der unabhängigen Ansprüche 1 und 2 gelöst.

Ein Aspekt der vorliegenden Erfindung besteht darin, dass beim Bürstenschleifkopf das Schleifelement aus einer Schleifmittelschicht und einer schleifmittelfreien Schicht besteht, welche unter Formerhalt komprimierbar ist und derart ausgebildet ist, dass in ihr ein Schleiffluid, insbesondere Wasser, speicherbar ist.

Der Terminus "unter Formerhalt komprimierbar" bedeutet, dass die schleifmittelfreie Schicht unter Krafteinfluss komprimierbar ist und die schleifmittelfreie Schicht dann, wenn keine Kraft mehr ausgeübt wird, wieder ihre ursprüngliche Form einnimmt. Durch diese Eigenschaft werden im Wesentlichen zwei Vorteile erzielt, nämlich dahingehend, dass die Schicht druckausgleichend wirkt und eine dämpfende Wirkung beim Schleifprozess entfaltet.

Die Eigenschaft, dass die schleifmittelfreie Schicht derart ausgebildet ist, dass ein Schleiffluid, insbesondere Wasser, speicherbar ist, hat den technischen Effekt, dass beim Nassschliff das in der schleifmittelfreien Schicht gespeicherte Schleiffluid sukzessive abgegeben und dadurch Schleifstaub effizient weggespült werden kann.

Gegenüber der herkömmlichen Bearbeitung der Oberflächen von Werkstücken aus Verbundwerkstoffen mittels Exzenterschleifern mit handelsüblichem Schleifpapier wird mit dem Bürstenschleifkopf eine deutliche Verkürzung der Bearbeitungszeit bei gleichzeitiger Verbesserung der Oberflächenqualität erzielt.

Als Material für die schleifmittelfreie Schicht bietet sich beispielsweise ein weicher Schaumstoff an. Dem Fachmann sind weiche Schaumstoffe bekannt. Als Beispiel sei offenzelliger Polyether-PU-Schaum genannt.

Erfindungsgemäß ist es vorgesehen, dass die Schleifmittelschicht eine für ein Schleiffluid, insbesondere Wasser, durchlässige, flexible, insbesondere textile, Trägerschicht für das Schleifmittel aufweist. Hierdurch wird ein besonders vorteilhaftes Zusammenwirken der schleifmittelfreien Schicht und der Schleifmittelschicht im Nassschliff erzielt, nämlich dahingehend dass ein in der schleifmittelfreien Schicht gespeichertes Schleiffluid durch die Schleifmittelschicht hindurch treten kann und Schleifstaub, der sich beim Schleifen auf der Schleifmittelschicht bildet, effizient weggespült werden kann.

Weiterhin ist es erfindungsgemäß vorgesehen, dass die Schleifmittelschicht Schleifmittel ausgewählt aus einer Gruppe bestehend aus Diamant und kubischem Bornitrid umfasst, vorzugsweise mit einer Korngröße von 1 bis 270 µm. Dies ist insbesondere bei der Bearbeitung von Oberflächen eines Werkstücks aus einem Verbundwerkstoff vorteilhaft.

Weiterhin ist es gemäß der vorliegenden Erfindung vorgesehen, dass die Schleifmittelschicht ein Bindemittel, vorzugsweise ein Harz-Bindemittel, aufweist. Dabei kann das Harzbindemittel ausgewählt sein aus der Gruppe bestehend aus Phenolharzen, Melaminharzen, Harnstoffharzen, Epoxydharzen, Polyesterharzen, Polyacrylatharzen oder Polyurethanharzen.

Und schließlich ist es erfindungsgemäß vorgesehen, dass die Bürsten aus Naturhaar, vorzugweise aus Kaktus-Haar, gebildet sind. Der Vorteil von Naturhaar gegenüber Kunsthaar liegt darin, dass unerwünschte elektrostatische Aufladungen vermieden bzw. reduziert werden. Diese Aufladungen würden Partikel anziehen, die das Schleifergebnis der Oberfläche negativ beeinflussen können.

Gemäß einer vorteilhaften Ausführungsform sind die Schleiflamellen jeweils über ein Befestigungselement, an welchem die Bürsten und das Schleifelement angebracht sind, mit dem Träger verbunden. Dabei können die Bürsten mit dem Schleifelement durch Klemmen und/oder Kleben an dem Befestigungselement befestigt werden. Die Verbindung der Befestigungselemente mit dem Träger kann beispielsweise dadurch erfolgen, dass das Befestigungselement im Querschnitt eine Schwalbenschwanzgeometrie aufweist und im, insbesondere walzenförmigen, Träger korrespondierende Nuten vorgesehen sind, in welche die Befestigungselemente axial eingeschoben sind. Es ist aber auch jede andere Form der Befestigung, mittels derer die Befestigungselemente mit dem Träger verbunden werden können, denkbar, z.B. über eine Verklebung, Verschraubung oder Verklemmung. Alternativ ist es auch vorstellbar, dass die Schleiflamellen nicht über ein Befestigungselement, sondern direkt mit dem Träger verbunden sind.

Vorteilhafterweise weist der Bürstenschleifkopf eine Rotationsachse auf und sind die Schleiflamellen parallel oder schräg zu dieser Rotationsachse an dem Träger angeordnet. Für den Fall, dass die Schleiflamellen schräg zur Rotationsachse des Bürstenschleifkopf an dem Träger angeordnet sind, erfolgt eine Verbiegung der Schleiflamellen. Im Falle eines walzenförmigen Träger sind die Schleiflamellen dann schraubenlinienförmig am Träger angeordnet.

Gezielt beeinflusst werden kann das Schleifresultat weiterhin dadurch, dass die Schleiflamellen gegenüber der Oberfläche des Trägers geneigt sind. Neigung gegenüber der Oberfläche des Trägers bedeutet, dass die Schleiflamellen nicht normal zur Oberfläche angeordnet sind, sondern einen von 90° abweichenden Winkel aufweisen. Dabei ist es denkbar, dass die Schleiflamellen sowohl in Richtung einer zu bearbeitenden Oberfläche oder in die entgegengesetzte Richtung gegenüber der Normalen verkippt sind.

Zur Bearbeitung von strukturierten Oberflächen, also z.B. Oberflächen, die eine Kante oder dergleichen aufweisen, bietet es sich an, dass das Schleifelement in Segmente unterteilt ist. Auf diese Weise kann sich der Bürstenschleifkopf ideal an die zu bearbeitende Oberflächenform anpassen.

Gemäß einer bevorzugten Ausführungsform ist der Bürstenschleifkopf Teil einer Schleifmaschine. Dabei kann es vorgesehen sein, dass die Schleifmaschine eine Handführung, vorzugsweise mit einer Schleiffluidzuführung, und/oder ein Abschirmelement aufweist. Dabei kann die Handführung derart ausgebildet sein, dass die Person zum Bedienen der Schleifmaschine auf der zu bearbeitenden Oberfläche steht und die Schleifmaschine vor sich her schiebt. Das Abschirmelement dient dazu, eine unerwünschte Verteilung von Schleiffluid und/oder Schleifstaub außerhalb des Bearbeitungsbereichs zu unterbinden. Idealerweise ist das Abschirmelement durchsichtig ausgeführt, um dem Bediener eine visuelle Kontrolle des Schleifprozesses zu ermöglichen.

Es hat sich herausgestellt, dass der Bürstenschleifkopf besonders gut dazu verwendet werden kann, eine, vorzugsweise mit einem Klarlack zum Schutz vor Umwelteinflüssen beschichtete, Oberfläche eines Werkstücks, wobei zumindest der an die zu bearbeitende Oberfläche angrenzende Bereich des Werkstücks aus einem Kohlefaser- oder Glasfaser-Verbundwerkstoff besteht, zu bearbeiten. Handelt es sich bei dem Werkstück beispielsweise um ein Teil, vorzugsweise einen Rotor, einer Windkraftanlage, so schützt der angesprochene Klarlack bei Windrädern, die auf offener See stationiert sind, vor zerstörenden Einflüssen durch Salzwasser und Salzkristalle. Die Klarlackschicht ist in Fachkreisen auch als "Clear-Coat" bekannt.

Gemäß der Erfindung ist auch die Verwendung eines vorbeschriebenen Bürstenschleifkopfs zur Bearbeitung einer, vorzugsweise mit Wachs beschichteten, Oberfläche einer Negativform zur Herstellung eines Werkstücks, das zumindest bereichsweise aus einem Kohlefaser- oder Glasfaser-Verbundwerkstoff besteht, geschützt. Damit die mittels der Negativformen hergestellten Werkstücke aus den Formen nach dem Produktionsvorgang wieder entnommen werden können, ist eine Behandlung der Oberflächen der Formen erforderlich. Hierzu wird üblicherweise eine Art Trennmittel, z.B. Wachs, auf die Formen aufgebracht. Dieses härtet aber bei der Produktion ebenfalls aus, sodass nach einer bestimmten Anzahl von Produktionszyklen die Beschichtung überarbeitet bzw. entfernt werden muss. Hierfür kann der Bürstenschleifkopf ebenfalls idealerweise verwendet werden.

Die angesprochenen Verwendungen erfolgen in besonders vorteilhafter Form unter Zufuhr eines Schleiffluids, bevorzugt von Wasser, besonders bevorzugt von mit Seife versetztem Wasser.

Weitere Einzelheiten und Vorteile der vorliegenden Erfindung werden anhand der Figurenbeschreibung unter Bezugnahme auf die Zeichnungen im Folgenden näher erläutert.

### Darin zeigen

- Fig. 1: einen Bürstenschleifkopf in einer perspektivischen Ansicht,
- Fig. 2: einen Querschnitt eines Bürstenschleifkopfs samt vergrößertem Ausschnitt eines Schleifelements,
- Fig. 3: einen Querschnitt einer Schleifmaschine,
- Fig. 4a -c: vorteilhafte Ausführungsformen einer Schleiflamelle in einer Seitenansicht,
- Fig. 5a: die Verwendung eines Bürstenschleifkopfs zur Bearbeitung einer mit Klarlack beschichteten Oberfläche eines Werkstücks aus einem Kohlefaser- oder Glasfaser-Verbundwerkstoff und
- Fig. 5b: die Verwendung eines Bürstenschleifkopfs zur Bearbeitung einer mit Wachs beschichteten Oberfläche einer Negativform zur Herstellung eines Werkstücks aus einem Kohlefaser- oder Glasfaser-Verbundwerkstoff.

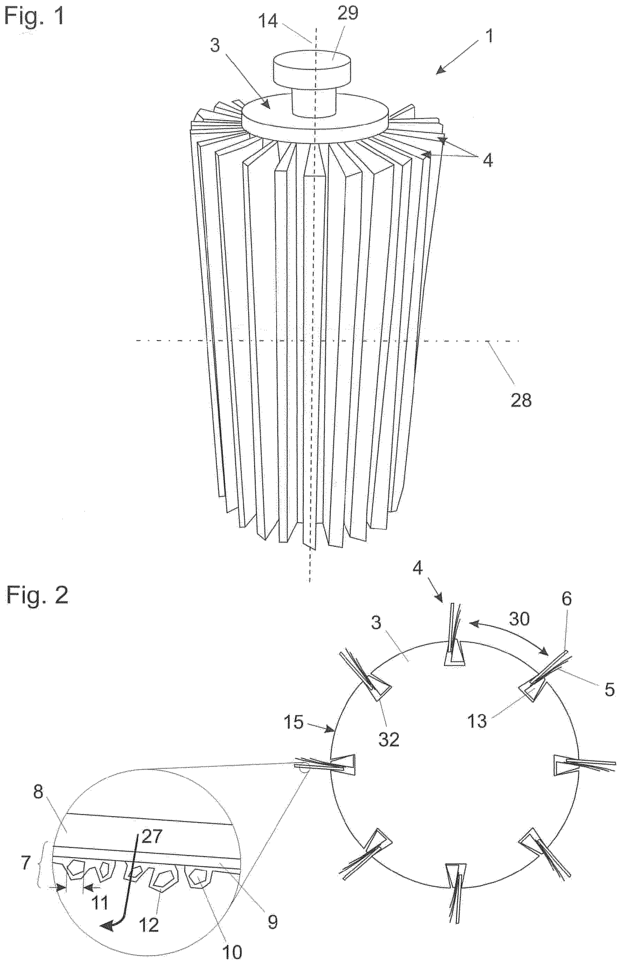

Figur 1 zeigt einen Bürstenschleifkopf 1 für eine Schleifmaschine 2 umfassend einen walzenförmigen Träger 3, wobei dieser Träger 3 im vorliegenden Fall rotationssymmetrisch ausgebildet ist.

Der Bürstenschleifkopf 1 umfasst weiterhin Schleiflamellen 4, die umfangseitig an dem Träger 3 angeordnet sind. Der Bürstenschleifkopf 1 weist eine Rotationsachse 14 auf. Parallel zu dieser Rotationsachse 14 sind die Schleiflamellen 4 an dem Träger 3 angeordnet. Alternativ ist auch eine Anordnung denkbar, bei welcher die Schleiflamellen 4 schräg zur Rotationsachse 14 ausgerichtet sind. In diesem Fall wären die Schleiflamellen 4 in sich um den Radius des Trägers 3 herum gebogen und insgesamt gesehen schraubenlinienförmig an dem Träger 3 angeordnet.

Der Träger 3 weist Fortsätze 29 auf, die an den beiden Stirnseiten des Trägers 3 angeordnet sind und mit denen der Bürstenschleifkopf 1 in eine Schleifmaschine 2 eingespannt werden kann.

Auch der Antrieb des Bürstenschleifkopfs 1 kann über die Fortsätze 29 erfolgen. Hierzu ist es vorteilhaft, die Geometrie der Fortsätze 29 derart anzupassen, dass in einfacher Weise eine Drehmoment übertragbar ist, beispielsweise durch das Vorsehen wenigstens einer Nut, in welche ein Teil eines Antriebsmittels formschlüssig eingreift.
Schließlich können die Fortsätze 29 als weitere technische Funktion dazu dienen, die Schleiflamellen 4 zu fixieren, beispielsweise gegen eine Verschiebung parallel zur Rotationsachse 14.

In den Fortsätzen 29 kann auch wenigstens eine Zentriereinrichtung zur Zentrierung des Bürstenschleifkopfes 1 in einer Schleifmaschine 2 vorgesehen sein, beispielsweise in Form einer zentralen Bohrung.

Die Fortsätze 29 können einstückig mit dem Träger 3 ausgebildet sein oder in Form von einem oder mehreren separaten Bauteilen ausgebildet und mit dem Träger 3, beispielsweise über Schrauben, verbunden sein.

In der Figur 1 sind die Schleiflamellen 4 nur schematisch in ihrer Gesamtheit angedeutet. Der genaue Aufbau geht aus der Figur 2 hervor, wobei es sich hierbei um eine Querschnittsdarstellung beispielsweise entlang der in Figur 1 strichpunktiert eingezeichneten Querschnittsebene 28 handelt. In diesem Zusammenhang sei darauf hingewiesen, dass in dieser Querschnittsdarstellung der Übersichtlichkeit halber nur acht Schleiflamellen 4 berücksichtigt wurden. Die Schleiflamellen 4 bestehen gemäß der Ausführungsform, welche in der Figur 2 dargestellt ist, aus Bürsten 5 und einem dazu benachbart angeordneten streifenförmigen Schleifelement 6, wobei diese beiden Bestandteile, also die Bürsten 5 und das Schleifelement 6, an einem Befestigungselement 13 über eine Klebeverbindung angeordnet sind. Die Gesamtheit aus Bürsten 5, dem Schleifelement 6 und dem Befestigungselement 13 in Form einer Leiste ist dann im Bereich des Befestigungselements 13 in korrespondierende Nuten 32, die umfangsseitig am Träger 3 vorgesehen sind, axial eingeschoben und werden über die Geometriegebung des Befestigungselements 13 bzw. der Nuten 32 drehsicher gehalten. Die Schleiflamellen 4 sind beabstandet voneinander an dem Träger 3 angeordnet. In der Figur 2 ist der Abstand zweier benachbarter Schleiflamellen 4 mit dem Bezugszeichen 30 versehen.

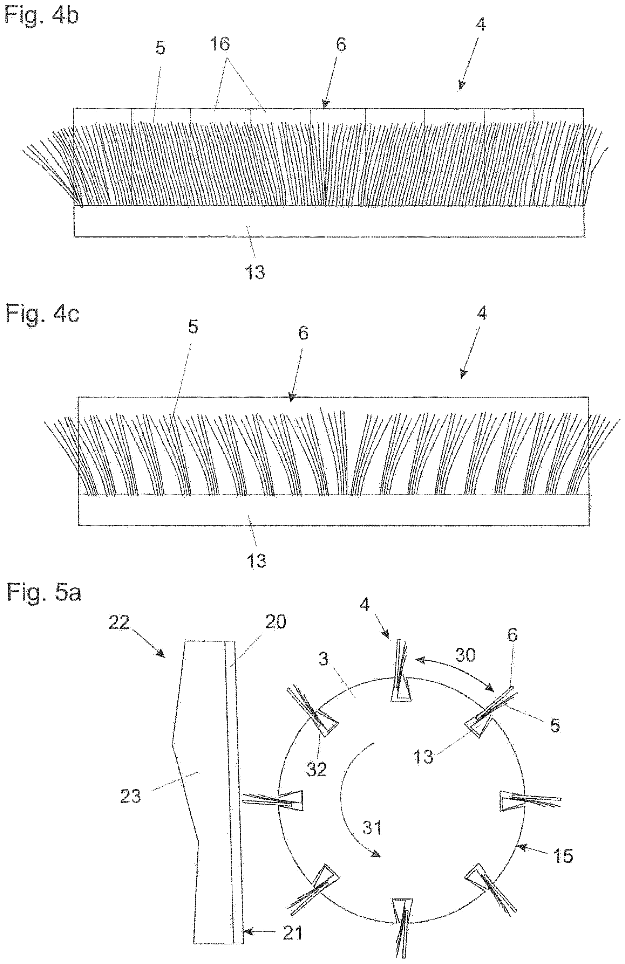

Aus der Figur 2 geht weiterhin hervor, dass die Schleiflamellen 4 leicht gegenüber der Oberfläche 15 des Trägers 3 geneigt sind, d.h. nicht normal zur Oberfläche 15 des Trägers 3 ausgerichtet sind, sondern leicht gegenüber dieser Normalen verkippt sind. Nimmt man eine Schleifrichtung 31 an, wie sie beispielswiese in der Figur 5a dargestellt ist, so sind die Lamellen 4 in der dargestellten Form leicht entgegen dieser Schleifrichtung 31 aus der Normalen heraus verkippt. Alternativ dazu kann aber auch eine Verkippung in Richtung der Schleifrichtung 31 vorgesehen sein, falls dies im konkreten Anwendungsfall ein vorteilhaftes Schleifresultat erzielt.

Figur 2 enthält auch einen vergrößerten Ausschnitt eines Schleifelements 6. Aus dieser Ansicht geht hervor, dass das Schleifelement 6 im dargestellten Fall aus einer Schleifmittelschicht 7 und einer schleifmittelfreien Schicht 8 besteht, wobei diese schleifmittelfreie Schicht 8 unter Formerhalt komprimierbar ist und derart ausgebildet ist, dass in ihr ein Schleiffluid 27, insbesondere Wasser, speicherbar ist. Dabei weist die Schleifmittelschicht 7 eine für das Schleiffluid 27 durchlässige, flexible textile Trägerschicht 9 für das Schleifmittel 10 auf. Die Schleifmittelschicht 7 kontaktiert die schleifmittelfreie Schicht 8 also über die für das Schleiffluid 27 durchlässige, flexible textile Trägerschicht 9. An der gegenüberliegenden Seite dieser Trägerschicht 9 ist das Schleifmittel 10 samt einem Bindemittel 12 angeordnet. Bei dem Schleifmittel 10 handelt es sich vorzugsweise um Diamant oder kubisches Bornitrid, vorzugsweise mit einer Korngröße 11 von 1 -270 µm. Anhand eines Pfeils ist angedeutet, wie das in der schleifmittelfreien Schicht 8 gespeicherte Schleiffluid 27 bei einem Nassschliff den Schleifprozess unterstützen kann, nämlich so, dass das Schleiffluid 27 über die Trägerschicht 9 der aktiven Seite der Schleifmittelschicht 7 zugeführt wird und dort Schleifstaub abtransportiert.

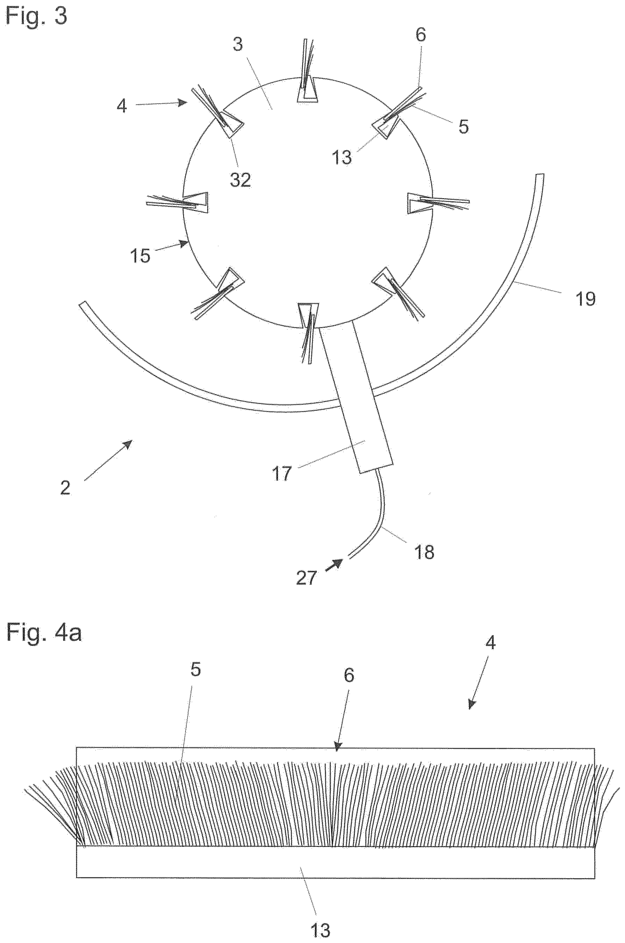

Figur 3 zeigt eine Querschnittsdarstellung eines vorteilhaften Ausführungsbeispiels einer Schleifmaschine 2, umfassend einen Bürstenschleifkopf 1 wie er in der Figur 2 dargestellt ist, wobei die Schleifmaschine 2 weiterhin eine Handführung 17 aufweist, mit welcher die Schleifmaschine 2 von einem Bediener auf der zu bearbeitenden Oberfläche bewegt werden kann. In die Handführung 17 ist dabei eine Schleiffluidzuführung 18 für ein Schleiffluid 27 integriert. Ein Teil des Bürstenschleifkopfs 1 wird weiterhin durch ein Abschirmelement 19 abgedeckt.

Die Figuren 4a bis 4c zeigen drei vorteilhafte Ausführungsformen einer Schleiflamelle 4, wobei es sich in diesen Fällen im Vergleich zu den Querschnittsansichten der Figuren 2 und 3 um eine Seitenansicht handelt. In allen drei Fällen sind jeweils an einem Befestigungselement 13 in Form einer Leiste Bürsten 5 und ein streifenförmiges Schleifelement 6 angeordnet, wobei im Falle der Figur 4a das Schleifelement 6 einstückig ausgebildet ist und die Bürsten 5 keine besondere Ordnung aufweisen.

Demgegenüber ist im Falle der Figur 4b das Schleifelement 6 in einzelne Segment 16, die relativ zueinander bewegbar sind, unterteilt.

In der Figur 4c sind die Bürsten 5 gebündelt.

Es ist auch eine alternative Kombination der beschriebenen Merkmale der Schleiflamellen 4 denkbar, also beispielsweise eine Bündelung der Bürsten 5 sowie eine Segmentierung des Schleifelements 6.

In allen drei Ausführungsbeispielen gemäß den Figuren 4a bis 4c sind die Bürsten 5 etwas kürzer als das Schleifelement 6 ausgebildet. Dies muss aber nicht zwingend der Fall sein. Genauso gut können die Haare der Bürsten 5 die gleiche Länge wie das Schleifelement 6 oder auch eine größere Länge aufweisen.

Figur 5a zeigt die Verwendung eines Bürstenschleifkopfs zur Bearbeitung einer mit einem Klarlack 20 zum Schutz vor Umwelteinflüssen beschichteten Oberfläche 21 eines Werkstücks 22, wobei zumindest der an die zu bearbeitende Oberfläche angrenzende Bereich 23 des Werkstücks 22 aus einem Kohlefaser- oder Glasfaser-Verbundwerkstoff besteht. Bei der dargestellten Verwendung wird der Bürstenschleifkopf 1 derart rotiert, dass die Schleiflamellen 4 die zu bearbeitende Oberfläche 21 zuerst mit dem Schleifelement 6 und anschließend mit den Bürsten 5 kontaktiert.

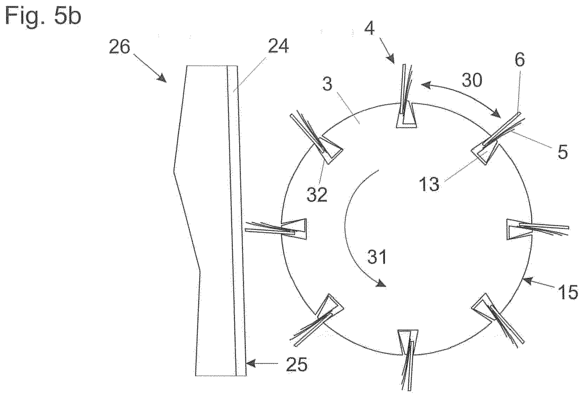

In der Figur 5b ist die Verwendung eines Bürstenschleifkopfs 1 zur Bearbeitung einer mit Wachs 24 beschichteten Oberfläche 25 einer Negativform 26 zur Herstellung eines Werkstücks 22, das zumindest bereichsweise aus einem Kohlefaser- oder Glasfaser-Verbundwerkstoff besteht, dargestellt.

Bei dem angesprochenen Werkstück 22, das im Falle der Figur 5a direkt bearbeitet wird oder im Falle der Figur 5b mittels der Negativform 26 hergestellt wird, handelt es sich beispielsweise um ein Teil, vorzugsweise einen Rotor, einer Windkraftanlage.

## Patentansprüche

1. Verwendung eines Bürstenschleifkopfs (1) zur Bearbeitung einer, vorzugsweise mit einem Klarlack (20) zum Schutz vor Umwelteinflüssen beschichteten, Oberfläche (21) eines Werkstücks (22), wobei zumindest ein an die zu bearbeitende Oberfläche (21) angrenzender Bereich (23) des Werkstücks (22) aus einem Kohlefaser- oder Glasfaser-Verbundwerkstoff besteht, und wobei der Bürstenschleifkopf (1) einen, insbesondere walzenförmigen, Träger (3) umfasst, die Verwendung ist **dadurch gekennzeichnet, dass** der Bürstenschleifkopf (1) Schleiflamellen (4) umfasst, wobei die Schleiflamellen (4) umfangsseitig an dem Träger (3) angeordnet sind und zumindest aus, insbesondere gebündelten, Bürsten (5) und einem dazu benachbart angeordneten, insbesondere streifenförmigen, Schleifelement (6) aufgebaut sind, wobei das Schleifelement (6) aus einer Schleifmittelschicht (7), welche ein Schleifmittel (10) ausgewählt aus einer Gruppe bestehend aus Diamant und kubischem Bornitrid, vorzugsweise mit einer Korngröße (11) von 1 bis 270 µm, ein Bindemittel (12), vorzugsweise ein Harz-Bindemittel, und eine für ein Schleiffluid (27), insbesondere Wasser, durchlässige, flexible, insbesondere textile, Trägerschicht (9) für das Schleifmittel (10) aufweist, und einer schleifmittelfreien Schicht (8) besteht, welche unter Formerhalt komprimierbar ist und derart ausgebildet ist, dass in ihr das Schleiffluid (27) speicherbar ist, wobei die Schleifmittelschicht (7) die schleifmittelfreie Schicht (8) über die Trägerschicht (9) kontaktiert und an der gegenüberliegenden Seite der Trägerschicht (9) das Schleifmittel (10) samt dem Bindemittel (12) angeordnet ist, so dass bei einem Nassschliff das in der schleifmittelfreien Schicht (8) gespeicherte Schleiffluid (27) über die Trägerschicht (9) einer aktiven Seite der Schleifmittelschicht (7) zugeführt wird und dort Schleifstaub abtransportieren kann, und wobei die Bürsten (5) aus Naturhaar, vorzugsweise aus Kaktus-Haar, gebildet sind.

2. Verwendung eines Bürstenschleifkopfs (1) zur Bearbeitung einer, vorzugsweise mit Wachs (24) beschichteten, Oberfläche (25) einer Negativform (26) zur Herstellung eines Werkstücks (22), das zumindest bereichsweise aus einem Kohlefaser- oder Glasfaser-Verbundwerkstoff besteht, wobei der Bürstenschleifkopf (1) einen, insbesondere walzenförmigen, Träger (3) umfasst, die Verwendung ist **dadurch gekennzeichnet, dass** der Bürstenschleifkopf (1) Schleiflamellen (4) umfasst, wobei die Schleiflamellen (4) umfangsseitig an dem Träger (3) angeordnet sind und zumindest aus, insbesondere gebündelten, Bürsten (5) und einem dazu benachbart angeordneten, insbesondere streifenförmigen, Schleifelement (6) aufgebaut sind, wobei das Schleifelement (6) aus einer Schleifmittelschicht (7), welche ein Schleifmittel (10) ausgewählt aus einer Gruppe bestehend aus Diamant und kubischem Bornitrid, vorzugsweise mit einer Korngröße (11) von 1 bis 270 µm, ein Bindemittel (12), vorzugsweise ein Harz-Bindemittel, und eine für ein Schleiffluid (27), insbesondere Wasser, durchlässige, flexible, insbesondere textile, Trägerschicht (9) für das Schleifmittel (10) aufweist, und einer schleifmittelfreien Schicht (8) besteht, welche unter Formerhalt komprimierbar ist und derart ausgebildet ist, dass in ihr das Schleiffluid (27) speicherbar ist, wobei die Schleifmittelschicht (7) die schleifmittelfreie Schicht (8) über die Trägerschicht (9) kontaktiert und an der gegenüberliegenden Seite der Trägerschicht (9) das Schleifmittel (10) samt dem Bindemittel (12) angeordnet ist, so dass bei einem Nassschliff das in der schleifmittelfreien Schicht (8) gespeicherte Schleiffluid (27) über die Trägerschicht (9) einer aktiven Seite der Schleifmittelschicht (7) zugeführt wird und dort Schleifstaub abtransportieren kann, und wobei die Bürsten (5) aus Naturhaar, vorzugsweise aus Kaktus-Haar, gebildet sind.

3. Verwendung nach Anspruch 1 oder 2, wobei die Verwendung unter Zufuhr eines Schleiffluids (27), bevorzugt von Wasser, besonders bevorzugt von mit Seife versetztem Wasser, erfolgt.

4. Verwendung nach einem der Ansprüche 1 bis 3, wobei es sich bei dem Werkstück (22) um ein Teil, vorzugsweise einen Rotor, einer Windkraftanlage handelt.

5. Verwendung nach einem der Ansprüche 1 bis 4, wobei die Schleiflamellen (4) des Bürstenschleifkopfs (1) jeweils über ein Befestigungselement (13), an welchem die Bürsten (5) und das Schleifelement (6) angebracht sind, mit dem Träger (3) verbunden sind.

6. Verwendung nach einem der Ansprüche 1 bis 5, wobei der Bürstenschleifkopf (1) eine Rotationsachse (14) aufweist und die Schleiflamellen (4) parallel oder schräg zu dieser Rotationsachse (14) an dem Träger (3) angeordnet sind.

7. Verwendung nach einem der Ansprüche 1 bis 6, wobei die Schleiflamellen (4) des Bürstenschleifkopfs (1) gegenüber der Oberfläche (15) des Trägers (3) geneigt sind.

8. Verwendung nach einem der Ansprüche 1 bis 7, wobei das Schleifelement (6) der Schleiflamellen (4) des Bürstenschleifkopfs (1) in Segmente (16) unterteilt ist.

9. Verwendung nach einem der Ansprüche 1 bis 8, wobei der Bürstenschleifkopf Teil einer Schleifmaschine (2) ist.

10. Verwendung nach Anspruch 9, wobei die Schleifmaschine (2) eine Handführung (17), vorzugsweise mit einer Schleiffluidzuführung (18), und/oder ein Abschirmelement (19) aufweist.

## Claims

1. Use of a brush grinding head (1) for machining a surface (21), preferably coated with a clear coat (20) for protection of environmental influences, of a work piece (22), wherein at least a region (23) of the work piece (22) adjacent to the surface (21) for machining consists of a carbon fibre composite material or a glass fibre composite material, and wherein the brush grinding head (1) comprises a, particularly drum-formed, carrier (3), the use is **characterized in that** the brush grinding head (1) comprises grinding lamellae (4), wherein the grinding lamellae (4) are arranged on the circumference of the carrier (3) and are composed of at least, particularly bundled, brushes (5) and an adjacently arranged, particularly lamellar, grinding element (6), wherein the grinding element (6) consists of a layer (7) of grinding means, which comprises grinding means (10) which are chosen from a group consisting of diamond and cubic boron nitride, preferably with a grain size (11) of 1 to 270 µm, a binding agent (12), preferably a resin-based binding agent, and a flexible, in particular textile, carrier layer (9) for the grinding means (10), which is permeable for the grinding fluid (27), particularly water, and a layer (8) which is free of grinding means, wherein the layer (8) is compressible while maintaining its form and is constructed in such a way, that a grinding fluid (27), particularly water, is storable in it, wherein the layer (7) of grinding means contacts the layer (8) which is free of grinding means via the carrier layer (9) and the grinding means (10) with the binding agent (12) is arranged at the opposite side of the carrier layer (9), such that when wet-grinding the grinding fluid (27) stored in the layer (8) which is free of grinding means is supplied to an active side of the layer (7) of grinding means via the carrier layer (9) and can there remove abrasive dust, and wherein the brushes (5) are made of natural hair, preferably of cactus hair.

2. Use of a brush grinding head (1) for machining a surface (25), preferably coated with wax (24), of a cast (26) for the production of a work piece (22), which at least region-wise consists of a carbon fibre composite material or a glass fibre composite material, wherein the brush grinding head (1) comprises a, particularly drum-formed, carrier (3), the use is **characterized in that** the brush grinding head (1) comprises grinding lamellae (4), wherein the grinding lamellae (4) are arranged on the circumference of the carrier (3) and are composed of at least, particularly bundled, brushes (5) and an adjacently arranged, particularly lamellar, grinding element (6), wherein the grinding element (6) consists of a layer (7) of grinding means, which comprises grinding means (10) which are chosen from a group consisting of diamond and cubic boron nitride, preferably with a grain size (11) of 1 to 270 µm, a binding agent (12), preferably a resin-based binding agent, and a flexible, in particular textile, carrier layer (9) for the grinding means (10), which is permeable for the grinding fluid (27), particularly water, and a layer (8) which is free of grinding means, wherein the layer (8) is compressible while maintaining its form and is constructed in such a way, that a grinding fluid (27), particularly water, is storable in it, wherein the layer (7) of grinding means contacts the layer (8) which is free of grinding means via the carrier layer (9) and the grinding means (10) with the binding agent (12) is arranged at the opposite side of the carrier layer (9), such that when wet-grinding the grinding fluid (27) stored in the layer (8) which is free of grinding means is supplied to an active side of the layer (7) of grinding means via the carrier layer (9) and can there remove abrasive dust, and wherein the brushes (5) are made of natural hair, preferably of cactus hair.

3. Use according to claim 1 or 2, wherein the use is effected while supplying a grinding fluid (27), preferably water, particularly preferred water charged with soap.

4. Use according to one of claims 1 to 3, wherein the work piece (22) is a part, preferably a rotor, of a wind energy plant.

5. Use according to one of claims 1 to 4, wherein the grinding lamellae (4) of the brush grinding head (1) are each connected to the carrier (3) by an attachment element (13), wherein the brushes (5) and the grinding element (6) are mounted to the attachment element (13).

6. Use according to one of claims 1 to 5, wherein the brush grinding head (1) comprises a rotational axis (14) and the grinding lamellae (4) are arranged parallel or angular to the rotational axis (14) at the carrier (3).

7. Use according to one of claims 1 to 6, wherein the grinding lamellae (4) of the brush grinding head (1) are inclined relatively to the surface (15) of the carrier (3).

8. Use according to one of claims 1 to 7, wherein the grinding element (6) of the grinding lamellae (4) is divided into sections (16).

9. Use according to one of claims 1 to 8, wherein the brush grinding head (1) is part of a grinding machine (2).

10. Use according to claim 9, wherein the grinding machine (2) comprises a hand guide (17), preferably with a supply (18) for the grinding fluid, and/or a protection shield (19).

## Revendications

1. Utilisation d'une tête abrasive à brosses (1) destinée à l'usinage d'une surface (21) d'une pièce (22) de préférence recouverte d'un vernis incolore (20) destiné à la protection contre les influences environnementales, au moins une zone (23) de la pièce (22) limitrophe de la surface (21) à usiner se composant d'un matériau composite de fibres de carbone ou fibres de verre, et la tête abrasive à brosses (1) comprenant un support (3), en particulier cylindrique, l'utilisation étant **caractérisée en ce que** la tête abrasive à brosses (1) comprend des lamelles abrasives (4), les lamelles abrasives (4) étant disposées côté circonférence sur le support (3) et étant au moins constituées de brosses (5), en particulier en faisceaux, et d'un élément abrasif (6), en particulier en forme de bande, disposé au voisinage de celles-ci l'élément abrasif (6) se composant d'une couche de produit abrasif (7) qui présente un produit abrasif (10) sélectionné parmi un groupe composé de diamant et de nitrure de bore cubique, de préférence avec une taille de grains (11) de 1 à 270 µm, un liant (12), de préférence un liant résineux, et une couche de support (9) pour le produit abrasif (10), perméable à un fluide abrasif (27), en particulier de l'eau, flexible, en particulier textile, et d'une couche (8) exempte de produit abrasif qui peut être comprimée en conservant sa forme et qui est agencée de telle sorte qu'elle peut stocker intérieurement le fluide abrasif (27), la couche de produit abrasif (7) entrant en contact avec la couche (8) exempte de produit abrasif par le biais de la couche de support (9), et le produit abrasif (10) conjointement avec le liant (12) étant disposés sur le côté opposé de la couche de support (9) de telle sorte que lors d'un meulage sous arrosage, le fluide abrasif (27) stocké dans la couche (8) exempte de produit abrasif est, par le biais de la couche de support (9), acheminé à un côté actif de la couche de produit abrasif (7) et peut évacuer à cet endroit les poussières d'abrasion, et les brosses (5) étant formées de poils naturels, de préférence des poils de cactus.

2. Utilisation d'une tête abrasive à brosses (1) destinée à l'usinage d'une surface (25), de préférence recouverte de cire (24), d'un moule négatif (26) destiné à la fabrication d'une pièce (22) qui se compose au moins par zones d'un matériau composite de fibres de carbone ou fibres de verre, la tête abrasive à brosses (1) comprenant un support (3), en particulier cylindrique, l'utilisation étant **caractérisée en ce que** la tête abrasive à brosses (1) comprend des lamelles abrasives (4), les lamelles abrasives (4) étant disposées côté circonférence sur le support (3) et étant au moins constituées de brosses (5), en particulier en faisceaux, et d'un élément abrasif (6), en particulier en forme de bande, disposé au voisinage de celles-ci l'élément abrasif (6) se composant d'une couche de produit abrasif (7) qui présente un produit abrasif (10) sélectionné parmi un groupe composé de diamant et de nitrure de bore cubique, de préférence avec une taille de grains (11) de 1 à 270 µm, un liant (12), de préférence un liant résineux, et une couche de support (9) pour le produit abrasif (10), perméable en particulier à un fluide abrasif (27), en particulier de l'eau, flexible, en particulier textile, et d'une couche (8) exempte de produit abrasif qui peut être comprimée en conservant sa forme et qui est agencée de telle sorte qu'elle peut stocker intérieurement le fluide abrasif (27), la couche de produit abrasif (7) entrant en contact avec la couche (8) exempte de produit abrasif par le biais de la couche de support (9), et le produit abrasif (10) conjointement avec le liant (12) étant disposés sur le côté opposé de la couche de support (9) de telle sorte que lors d'un meulage sous arrosage, le fluide abrasif (27) stocké dans la couche (8) exempte de produit abrasif est, par le biais de la couche de support (9), acheminé à un côté actif de la couche de produit abrasif (7) et peut évacuer à cet endroit les poussières d'abrasion, et les brosses (5) étant formées de poils naturels, de préférence des poils de cactus.

3. Utilisation selon la revendication 1 ou 2, l'utilisation s'effectuant avec acheminement d'un fluide abrasif (27), de préférence de l'eau, de façon particulièrement préférée d'eau additionnée de savon.

4. Utilisation selon l'une des revendications 1 à 3, s'agissant en ce qui concerne la pièce (22) d'une partie, en particulier d'un rotor, d'une éolienne.

5. Utilisation selon l'une des revendications 1 à 4, les lamelles abrasives (4) de la tête abrasive à brosses (1) étant raccordées au support (3) respectivement par le biais d'un élément de fixation (13) sur lequel sont mis en place les brosses (5) et l'élément abrasif (6).

6. Utilisation selon l'une des revendications 1 à 5, la tête abrasive à brosses (1) présentant un axe de rotation (14), et les lamelles abrasives (4) étant disposées parallèlement ou obliquement à cet axe de rotation (14) sur le support (3).

7. Utilisation selon l'une des revendications 1 à 6, les lamelles abrasives (4) de la tête abrasive à brosses (1) étant inclinées par rapport à la surface (15) du support (3).

8. Utilisation selon l'une des revendications 1 à 7, l'élément abrasif (6) des lamelles abrasives (4) de la tête abrasive à brosses (1) étant divisé en segments (16).

9. Utilisation selon l'une des revendications 1 à 8, la tête abrasive à brosses faisant partie d'une meuleuse (2).

10. Utilisation selon la revendication 9, la meuleuse (2) présentant un guidage manuel (17), de préférence avec un acheminement de fluide de meulage (18) et/ou un élément d'écran (19).
